# EUROPÄISCHE PATENTSCHRIFT

(11) **EP 0 826 119 B1**
(45) Veröffentlichungstag und Bekanntmachung des Hinweises auf die Patenterteilung: **05.07.2000**
(21) Anmeldenummer: 97906989.5
(22) Anmeldetag: 09.01.1997
(51) Int. Cl.: F16H 61/12, F16H 61/38

(54) **HYDRAULIKNOTSTEUERUNG MIT VORSCHALTVENTILEN FÜR EIN STUFENLOSES UMSCHLINGUNGSGETRIEBE**
EMERGENCY HYDRAULIC CONTROL WITH CONTROL VALVES FOR CONTINUOUSLY VARIABLE TRANSMISSION
SYSTEME DE COMMANDE HYDRAULIQUE D'URGENCE AVEC SOUPAPES DE COMMANDE POUR TRANSMISSION A VARIATION CONTINUE

(30) Priorität: 13.03.1996 DE 19609785
(43) Veröffentlichungstag der Anmeldung: 04.03.1998
(73) Patentinhaber: ROBERT BOSCH GMBH, 70442 Stuttgart (DE)
(72) Erfinder: SPIESS, Ewald, D-71665 Vaihingen (DE); LUH, Joachim, D-74321 Bietigheim-Bissingen (DE); BÄUERLE, Peter, D-71636 Ludwigsburg (DE)
(86) Internationale Anmeldenummer: DE9700024
(87) Internationale Veröffentlichungsnummer: WO9734094

(56) Entgegenhaltungen:
- EP-A- 0 324 928
- EP-A- 0 412 758
- EP-A- 0 487 129
- EP-A- 0 487 134
- EP-A- 0 621 421

## Beschreibung

### Stand der Technik

Die Erfindung geht von einer Hydrauliknotsteuerung nach dem Oberbegriff des Hauptanspruchs aus, wie sie im vorveröffentlichten Stand der Technik hinlänglich bekannt ist, siehe z.B. die EP-A-487 134.

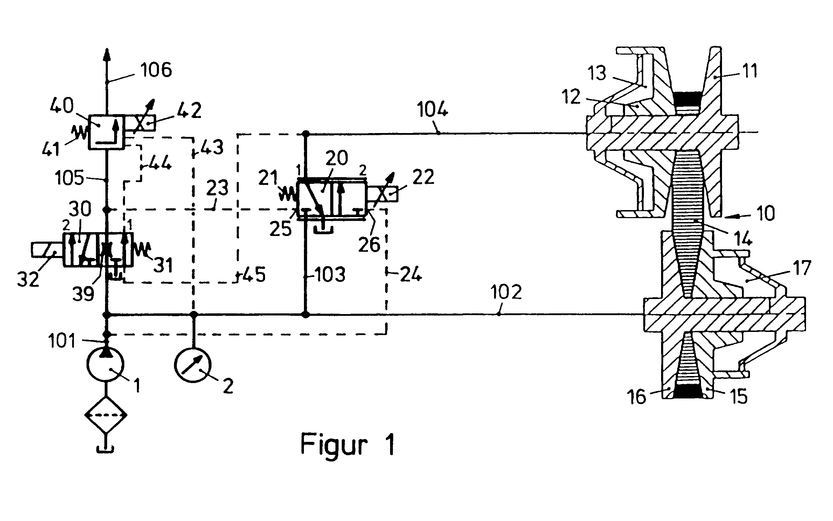

In der nicht vorveröffentlichten DE 195 19 162.5 entsprechend der WO-96-37717 ist eine Hydrauliknotsteuerung für ein elektronisch gesteuertes, kontinuierlich variables Getriebe (continuously variable transmission, CVT) beschrieben. Das CVT-Getriebe, das vorzugsweise in Personenkraftwagen verwendet wird, weist eine Steuerung für den Notfahrbetrieb auf, die bei einem Ausfall der elektrohydraulischen Ansteuerung für den Normalfahrbetrieb eine Spannung des Übertragungsmittels mit einfachen hydraulischen Mitteln gewährleistet. Diese Mittel werden in der Beschreibung zu Figur 1 angegeben. Sie gewähren zum einen ein Anfahren z.B. unter Vollast ohne Durchrutschen des Obertragungsmittels und ermöglichen zum anderen nach dem Anfahren eine Getriebeverstellung von einer hohen Anfahrübersetzung zu einer niedrigen Overdrive-Übersetzung.

Die Hydraulikventile, die vom Normalfahrbetrieb auf den Notfahrbetrieb umschalten, werden im Normalfahrbetrieb mit Hilfe von elektromagnetischen Betätigungen in den für diesen Fahrbetriebs zustand notwendigen Schalt- und/oder Steuerstellungen gehalten.

### Vorteile der Erfindung

Die Hydrauliknotsteuerung wird benötigt, um ein stufenlos übersetzendes Umschlingungsgetriebe ohne die Unterstützung einer im Normalfahrbetrieb aktiven elektrohydraulischen Ansteuerung einen Notfahrbetrieb zu ermöglichen. In der Hydrauliknotsteuerung mit den Merkmalen des Hauptanspruchs wird u.a. das Schaltventil, das bei einem Ausfall der Ansteuerelektronik vom Normalfahrbetrieb auf den Notfahrbetrieb umschaltet, so hydraulisch gesteuert, daß es aufgrund von im System vorhandenen Steuerdruckänderungen seine Schaltstellung ändert. Beispielsweise schaltet es vom Normalfahrbetrieb auf den Notfahrbetrieb um. Die zur Steuerung des Schaltventils verwendeten Drücke treten nur auf, wenn die Ansteuerelektronik ausfällt oder schon ausgefallen ist. Sobald die Steuerdruckänderungen im System wieder einem Normalfahrzustand entsprechen, wie er bei intakter Ansteuerelektronik gegeben ist, schaltet das Schaltventil in die Schaltstellung für den Normalfahrbetrieb zurück. Das Schaltventil ist im allgemeinen Fall für die Aktivierung einer beliebigen Funktion verantwortlich.

Mit der erfindungsgemäßen Hydrauliknotsteuerung wird u.a. an dem beschriebenen Schaltventil die gesamte elektrische Ansteuerung eingespart.

Weitere Einzelheiten der Erfindung ergeben sich aus den Unteransprüchen und der Figurenbeschreibung.

### Zeichnungen

Drei Ausführungsbeispiele der Erfindung sind neben dem Stand der Technik in den Zeichnungen schematisch in Form von Hydraulikschaltplänen dargestellt und in der nachfolgenden Figurenbeschreibung erläutert. Es zeigen
- Figur 1:: eine Hydrauliknotsteuerung nach dem Stand der Technik;
- Figur 2:: Hydrauliknotsteuerung nach Figur 1 mit elektrisch betätigten Vorsteuerventilen, deren Bestromung proportional zum Vorsteuerdruck ist;
- Figur 3:: Hydrauliknotsteuerung nach Figur 2 mit Vorsteuerventilen, deren Bestromung umgekehrt proportional zum Vorsteuerdruck ist;
- Figur 4:: Hydrauliknotsteuerung nach Figur 3, bei der zur Vorsteuerung auch der Arbeitsdruck verwendet wird.

### Beschreibung der Ausführungsbeispiele

Figur 1 zeigt einen, dem Stand der Technik entsprechenden Ausschnitt aus einem Hydraulikschaltplan zur Steuerung der Hydrauliköldrücke der an- und abtriebsseitigen Druckzylinder eines stufenlos übersetzenden Umschlingungsgetriebes. Das bekannte Umschlingungsgetriebe (10) umfaßt zwei Kegelscheibenpaare zwischen denen ein Übertragungsmittel (14), beispielsweise ein Schubgliederband, eine Kette, ein Keilriemen oder dergleichen, angeordnet ist. Beide Kegelscheibenpaare bestehen jeweils aus zwei Kegelscheiben (11, 12; 15, 16), die hydraulisch gegeneinander verspannbar ausgebildet sind. Die dazu notwendigen Kolben- und Zylinderteile sind vorzugsweise zumindest in einem Teil der Kegelscheiben integriert. Die von diesen Teilen eingeschlossenen Kolbenräume, auf der Primärseite der Kolbenraum (13) und auf der Sekundärseite der Kolbenraum (17), werden entsprechend der eingestellten Übersetzung mit dem jeweiligen Arbeitsdruck beaufschlagt.

In den hier beschriebenen Ausführungen ist der erforderliche abtriebsseitige Sekundärdruck größer oder gleich dem notwendigen antriebsseitigen Primärdruck. Während des Normalfahrbetriebes, bezüglich der Ventilstellungen in Figur 1 nicht dargestellt, werden die Kolbenräume (13) und (17) über eine beispielsweise vom Fahrzeugmotor angetriebene hydrostatische Pumpe (1) mit Hydrauliköl versorgt. Die Pumpe (1) fördert das Druckmittel über die Arbeitsleitungen (101) und (102) in den sekundärseitigen Kolbenraum (17).

Der Primäröldruck im Kolbenraum (13) wird mit Hilfe eines 3/2-Stetigwegeventils (20) eingestellt. Das Primärdruckventil (20), das über eine Arbeitsleitung (103) aus der sekundären Arbeitsleitung (102) versorgt wird, ist über eine Arbeitsleitung (104) an der Kolbenkammer (13) angeschlossen. Es weist neben einer beidseitigen hydraulischen Betätigung linksseitig eine Rückstellfeder (21) und rechtsseitig eine regelbare elektrische Betätigung (22) auf. Die Drücke in den am Stetigwegeventil (20) an den Steueranschlüssen (25) und (26) adaptierten Steuerleitungen (23) und (24) beeinflussen die elektrische Verstellung dieses Ventils (20) nicht, da sie bei betätigtem Ventil (30), also bei dort nahezu ungedrosselter Schaltstellung, den gleichen Wert haben.

Der Druck in den Arbeitsleitungen (101) und (102) bzw. in dem Kolbenraum (17) wird mittels eines Drucksensors (2) erfaßt.

Des weiteren strömt das von der Pumpe (1) geförderte Hydrauliköl über ein 5/2-Wegeventil (30) und eine Arbeitsleitung (105) zu einem fremdgesteuerten Druckbegrenzungsventil (40). Im Normalfahrbetrieb befindet sich das 5/2-Wegeventil (30) in der Schaltstellung 2, womit zum einen die Arbeitsleitungen (101) und (105) nahezu ungedrosselt miteinander verbunden sind und zum anderen eine zwischen den Ventilen (30) und (40) liegende Steuerleitung (44) in den Tank entlastet wird. Mit Hilfe des fremdgesteuerten Druckbegrenzungsventils (40), das mit einer rechtsseitigen elektrischen Betätigung (42), einer linksseitigen Rückstellfeder (41) ausgestattet ist, wird der Sekundärdruck begrenzt und gesteuert. Für die übliche, hydraulische Begrenzung wird über eine Steuerleitung (43) der vor dem Ventil (40) anliegende Druck aus der Arbeitsleitung (102) abgegriffen. Mittels der regelbaren elektrischen Betätigung (42) wird im Normalfahrbetrieb der Sekundäröldruck entsprechend einem vorgegebenen Betriebszustand auf das für die Bandspannung im übertragungsmittel (14) erforderliche Niveau abgesenkt. Das für die Kegelscheibenverstellung nicht benötigte Hydrauliköl wird in eine Arbeitsleitung (106) mit niedrigerem Druckniveau weitergeleitet. Von der Arbeitsleitung (106) aus kann das Hydrauliköl weiteren Antriebsbaugruppen, wie z.B. einer Kupplung, einem Wandler oder der Schmierung zur Verfügung stehen.

Bei einem Ausfall der Ansteuerelektronik wird das Ventil (30) von seiner Rückstellfeder (31) in die Schaltstellung 1 bewegt. Das von der Pumpe (1) geförderte Hydrauliköl wird von einem im Ventil (30) integrierten, als Meßblende wirkenden Drossel- oder Blendenventil (39) gedrosselt, um dann über die Arbeitsleitungen (105) durch das Druckbegrenzungsventil (40) und die Arbeitsleitungen (106) mit niedrigem Druckniveau abgeleitet zu werden. Im Druckbegrenzungsventil (40) fällt die elektrische Betätigung (42) aus. Ersatzweise wird durch das in Schaltstellung 1 bewegte Ventil (30) die primärdruckabhängige Fremdbetätigung über die Steuerleitungen (44), (45) zugeschaltet. Somit wird bei steigendem Primäröldruck der Sekundäröldruck reduziert.

In den vor und nach dem Drosselventil (39) angeschlossenen Steuerleitungen (23) und (24) wird das dort anliegende Druckgefälle an die Steuereingänge (25) und (26) des Primärdruckventils (20) weitergegeben. Hierbei wird vorausgesetzt, daß sich die Fördermenge der Pumpe (1) zumindest in dem für die Übersetzungsverstellung relevanten Drehzahlbereich als Funktion der Drehzahl ändert. Das Drosselventil (39), die wirksamen Flächen des Schiebers im Ventil (20) im Bereich der Steuereingänge (25) und (26) sowie die Rückstellfeder (21) sind derart aufeinander abgestimmt, daß sich das Ventil (20) bei der für die Kegelscheibenverstellung vorgesehenen Motordrehzahl näherungsweise in mittlerer Schließstellung befindet. Steigt die Motordrehzahl weiter an, öffnet das Ventil (20) infolge des höheren Druckabfalls am Drosselventil (39) zunehmend, womit Hydrauliköl aus der Arbeitsleitung (103) über die primärseitige Arbeitsleitung (104) in den Kolbenraum (13) gelangt. Folglich verringert sich das Übersetzungsverhältnis in Richtung "Overdrive", bis die Motordrehzahl wieder die für den Notfahrbetrieb vorgesehene Solldrehzahl erreicht hat.

Bei sinkender Motordrehzahl bewegt sich der Schieber des Ventils (20) in Richtung auf die Schaltstellung 1, wodurch das Hydrauliköl aus dem Kolbenraum (13) in den Tank abfließen kann. In diesem Fall vergrößert sich das Übersetzungsverhältnis in Richtung "Low". Folglich steigt die Motordrehzahl wieder.

Auf diese Weise kann die Getriebeübersetzung von "Low" bis "Overdrive" bei annähernd konstanter Motordrehzahl verstellt werden.

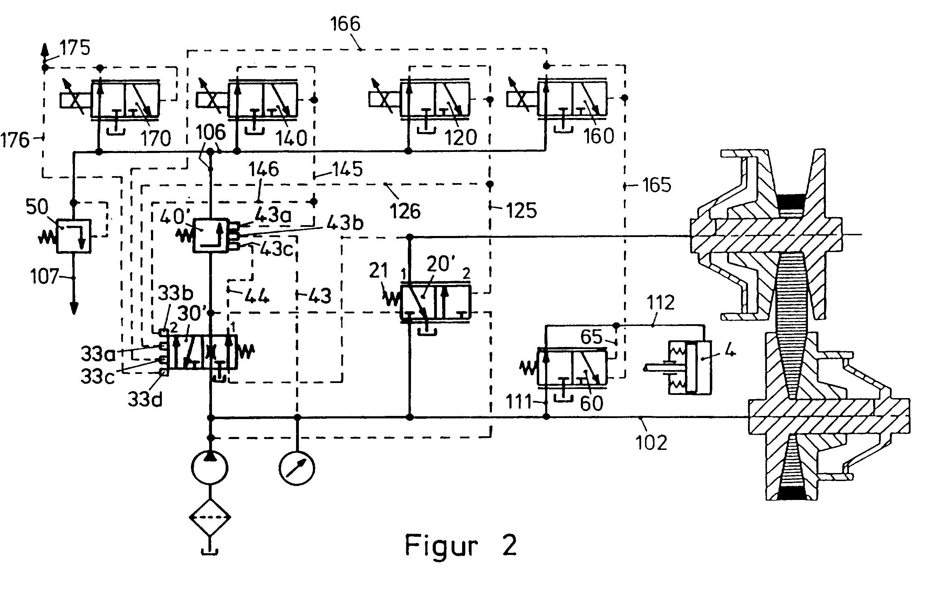

Bei den Hydraulikschaltplänen der Figuren 2, 3 und 4 werden die elektrischen Betätigungen der in Figur 1 gezeigten Ventile (20), (30) und (40) durch hydraulische Vorsteuerungen ersetzt. Die Vorsteuerungen übernehmen beispielsweise hydraulisch und elektrisch betätigte Vorsteuerventile (120), (140), (160) und (170). Diese Vorsteuerventile sind 3/2-Stetigwegeventile. Jedes Vorsteuerventil hat einen Zulauf-, Rücklauf-, Arbeits-und Steueranschluß. Der Steueranschluß liegt gegenüber der jeweiligen regelbaren elektrischen Betätigung. Bei jedem Vorsteuerventil ist der Arbeitsanschluß mit dem Steueranschluß verbunden. Die Zulaufanschlüsse aller Vorsteuerventile werden über die Arbeitsleitung (106) versorgt. Am Ende ist ein Druckbegrenzungsventil (50) angeordnet, das in der Arbeitsleitung (106) für einen Hydraulikdruck mit mittlerem Niveau sorgt.

Der Arbeitsanschluß des Vorsteuerventils (140) ist zum einen über eine Steuerleitung (145) mit dem Ventil (40') und zum anderen über eine Steuerleitung (146) mit dem Ventil (30') verbunden. Die Steuerleitungen (146), (43) und (44) enden hier am Ventil (40') vor separaten Steuerflächen (43a, 43b, 43c).

Der Arbeitsanschluß des Vorsteuerventils (120) steht ebenfalls zum einen über eine Steuerleitung (125) mit dem rechtsseitigen Steueranschluß des Ventil (20') und zum anderen über eine Steuerleitung (126) mit dem Ventil (30') in Verbindung.

Aus der Arbeitsleitung (102) zweigt eine Arbeitsleitung (111) zu einem weiteren 3/2-Wegefühlerventil (60) ab. Das Ventil (60) dient der Ansteuerung einer nachgeschalteten Anfahrkupplung (4), an der es mittels einer Arbeitsleitung (112) angeschlossen ist. Das Ventil (60) ist hier auf seiner linken Seite mit einer Rückstellfeder und auf seiner rechten Stirnseite über zwei Steuerleitungen (65) und (165) hydraulisch belastet. Die Steuerleitung (65) ist an der Arbeitsleitung (112) angeschlossen. Die zweite Steuerleitung (165) führt zum Arbeitsanschluß des Vorsteuerventils (160). Am gleichen Arbeitsanschluß liegt eine Steuerleitung (166), über die das Ventil (30') hydraulische vorgesteuert wird.

Das vierte in Figur 2 dargestellte Vorsteuerventil (170) wird für die Ansteuerung einer Wandlerüberbrückungskupplung oder einer anderen - nicht dargestellten - hydraulisch betätigten Baugruppe benutzt. Dazu führen vom am Arbeitsanschluß des Vorsteuerventils (170) zwei Steuerleitungen (175) und (176) weg. Die letztere Steuerleitung ist an der linken Stirnseite des Ventils (30') angeschlossen.

An der linken Stirnseite des Ventils (30') befinden sich vier hydraulische Betätigungen mit dem symbolisch dargestellten Steuerflächen (33a- 33d). Beispielsweise trifft jede dort ankommende Steuerleitung (126, 146, 166 und 176) auf eine bestimmte Steuerfläche, wobei die Steuerleitungen nicht untereinander hydraulisch verbunden sind. Jeder einzelne Vorsteuerdruck bewirkt am Scheiber des Ventils (30') eine Vorsteuerkraft, die sich zu einer Gesamtkraft addieren.

Die Vorsteuerventile (120), (140), (160) und (170) weisen bei ansteigendem Druckreglerstrom eine steigende Druckkennlinie auf. Sie können u.a. beispielsweise als Schieberdruckregler, Flachsitzdruckregler und/oder als pulsweitenmodulierte Druckregler ausgebildet sein.

Während des Normalfahrbetriebes sind die elektrischen Betätigungen der Vorsteuerventile (120), (140), (160) und (170) so bestromt, daß die über die Steuerleitungen (126, 146, 166 und 176) auf die an der linken Stirnseite des Ventils (30') angeordneten Steuerflächen (33a- 33d) wirkenden Steuerdrücke das Ventil in der Schaltstellung 2 halten.

Ferner befindet sich bei dem Ventil (20') die durch den in der Steuerleitung (125) anliegenden Steuerdruck bewirkte Kraft mit der Federkraft der Rückstellfeder (21) im Gleichgewicht.

Mit einem Ausfall der Ansteuerelektronik fällt die elektrische Betätigung der Vorsteuerventile (120), (140), (160) und (170) aus, womit die Steuerdrücke in den Steuerleitungen (126), (146), (166) und (176) auf minimale Werte absinken. Das Ventil (30') wird von seiner Rückstellfeder (31) in die Schaltstellung 1 bewegt, womit auf Notfahrbetrieb umgeschaltet wird.

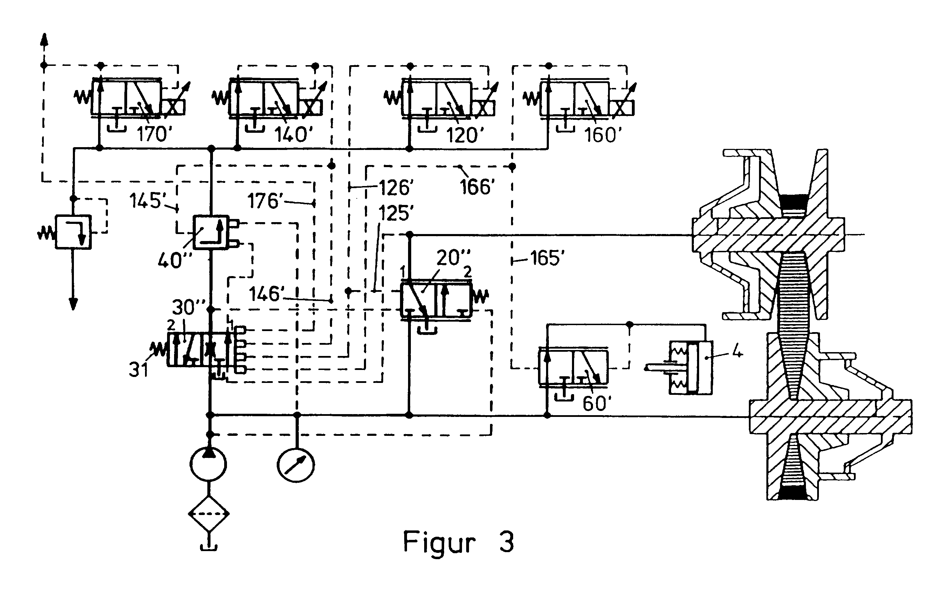

In Figur 3 ist ein Hydraulikschaltplan mit Vorsteuerventilen (120'), (140'), (160') und (170') gezeigt. Die Ventile haben beispielsweise linksseitig Rückstellfedern, während auf ihren gegenüberliegenden Seiten eine Kombination aus elektrischer und hydraulischer Betätigung angeordnet ist. Der Steuerdruck für die hydraulische Betätigung der nachgeschalteten Ventile wird jeweils aus einer vom jeweiligen Arbeitsanschluß wegführenden Steuerleitung entnommen. Die Steuerleitungen (126'), (146'), (166') und (176') führen alle beispielsweise zur rechten Stirnseite des Ventils (30"). Auf der gegenüberliegenden Stirnseite befindet sich die Rückstellfeder (31). Die von den Vorsteuerventilen wegführenden Steuerleitungen (125'), (145') und (165') enden bei den Ventilen (20"), (40") und (60') auf den Stirnseiten, auf denen bei den Ventilen (20'), (40') und (60) aus Figur 2 jeweils die Rückstellfedern angeordnet sind.

Zumindest bei den Ventilen (40") und (60') ersetzt die hydraulische Betätigung die mechanische. Bei Ventil (20") wechseln die hydraulische und die mechanische Betätigung die Stirnseiten gegenüber dem Ventil (20') aus Figur 2.

Die Vorsteuerventile (120'), (140'), (160') und (170') weisen bei ansteigendem Druckreglerstrom eine fallende Druckkennlinie auf. Bei einem Ausfall der Bestromung steigt der Druck in den Steuerleitungen (126'), (146'), (166') und (176') auf den jeweils maximalen Grenzwert, so daß das Notventil (30") entgegen der Kraft der Rückstellfeder (31) in die Schaltstellung 1 wechselt.

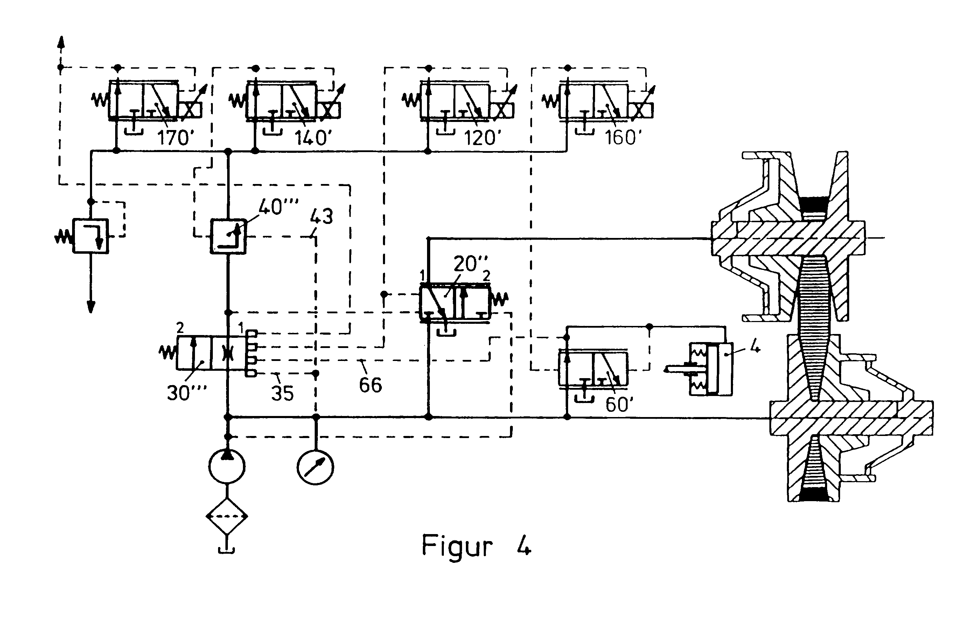

Figur 4 zeigt einen Hydraulikschaltplan, bei dem das zwischen Normal- und Notfahrbetrieb umschaltende Ventil (30''') nur zum Teil über Vorsteuerventile angesteuert wird. Es sind hier die Vorsteuerventile (120') und (170'). An der rechten Stirnseite des Ventils (30''') ist ferner eine Steuerleitung (35) angeschlossen, die aus der Steuerleitung (43) gespeist wird. Die Steuerleitungen (35) und (43) stehen unter Sekundärdruck. Des weiteren wird das Ventil (30''') über die Steuerleitung (66) mit dem an der Anfahrkupplung (4) anstehenden Hydraulikdruck angesteuert. Auch andere hydraulische Baugruppen können weitere Ansteuerdrücke zur Steuerung des Ventils (30''') bereitstellen.

Das Ventil (30''') schaltet im Gegensatz zu den Ventilen (30') und 30") nur zwischen freiem und gedrosseltem Durchgang um.

Anstelle der mechanischen Federrückstellungen, die ggf. auch bezüglich der Federrate einstellbar sind, können bei den in den Figuren 2, 3 und 4 dargestellten Ventilen teilweise auch hydraulische Betätigungen eingesetzt werden. Ferner können die zu den Ventilen (30'), (30") und (30''') führenden Steuerleitungen nicht nur an diesen Ventilen zusammenführen, sondern auch an nahezu beliebigen Stellen vor diesen Ventilen. In diesem Fall addieren sich bei den zusammengeführten Steuerleitungen die durch die Vorsteuerdrücke bewirkten Kräfte nicht.

## Patentansprüche

1. Hydrauliknotsteuerung für eine übersetzungsabhängige Änderung der Hydrauliköldrücke in einer ersten und einer zweiten hydraulischen Kegelscheibenaxialverstelleinrichtung eines stufenlosen Umschlingungsgetriebes (10), bei der eine Pumpe (1) zumindest den Kolbenraum (17) der zweiten Axialverstelleinrichtung versorgt und mindestens ein nachgeschaltetes Druckbegrenzungsventil (40', 40", 40"', 50) den dortigen Öldruck begrenzt und ferner aus dieser Versorgung über ein Stetigwegeventil (20', 20") den Kolbenraum (13) der ersten Axialverstelleinrichtung speist, dadurch gekennzeichnet, daß das Stetigwegeventil mit Hilfe eines an einem der Pumpe (1) nachgeordneten und in einem Schaltventil (30', 30", 30"') integrierten Drosselventil (39) anliegenden Druckgefälles gesteuert wird, und
daß das Schaltventil (30', 30", 30'''), das Stetigwegeventil (20', 20") und das Druckbegrenzungsventil (40', 40", 40''') jeweils über mindestens eines von mehreren Vorsteuerventilen (120, 120' ; 140, 140' ; 160, 160' und/oder 170, 170') gegen die Wirkung einer am entsprechenden gesteuerten Ventil angeordneten mechanischen und/oder hydraulischen Betätigung hydraulisch angesteuert wird.

2. Hydrauliknotsteuerung gemäß Anspruch 1, dadurch gekennzeichnet, daß das von den einzelnen Vorsteuerventilen (120, 120' ; (140, 140' ; 160, 160' und/oder 170, 170') über separate Steuerleitungen (126, 146, 166, und/oder 176) kommende Vorsteueröl am Umschaltventil (30', 30", 30''') auf separate Steuerflächen (33b, 33a, 33c und/oder 33d) geleitet wird, wobei die Steuerflächen unterschiedlich groß sein können.

3. Hydrauliknotsteuerung gemäß Anspruch 1, dadurch gekennzeichnet, daß das am Druckbegrenzungsventil (40', 40", 40''') anstehende Fremdsteueröl pro Steuerleitung auf eine separate Steuerfläche (43a, 43b und/oder 43c) geleitet wird, wobei die Steuerflächen unterschiedlich groß sein können.

4. Hydrauliknotsteuerung gemäß Anspruch 1, dadurch gekennzeichnet, daß mindestens zwei der Vorsteuerventile (120, 120' ; 140, 140' ; 160, 160' und/oder 170, 170') das Schaltventil (30', 30", 30''') gemeinsam ansteuern.

5. Hydrauliknotsteuerung gemäß Anspruch 1, dadurch gekennzeichnet, daß der von den Vorsteuerventilen gesteuerte Druck einer zwischen den Druckbegrenzungsventilen (40', 40", 40"' und 50) liegenden Arbeitsleitung (106) entnommen wird.

6. Hydrauliknotsteuerung gemäß Anspruch 1, dadurch gekennzeichnet, daß die Vorsteuerventile (120, 140, 160 und 170) elektrisch und hydraulisch betätigte 3/2-Stetigwegeventile sind, deren jeweils einziger Arbeitsanschluß mit dem jeweils einzigen eigenen, der jeweiligen elektrischen Betätigung gegenüberliegenden Steueranschluß hydraulisch verbunden ist.

7. Hydrauliknotsteuerung gemäß Anspruch 1, dadurch gekennzeichnet, daß die Vorsteuerventile (120', 140', 160' und 170') elektrisch und hydraulisch betätigte 3/2-Stetigwegeventile mit Federrückstellung sind, deren jeweils einziger Arbeitsanschluß mit dem jeweils einzigen eigenen, der jeweiligen Federrückstellung gegenüberliegenden Steueranschluß hydraulisch verbunden ist.

8. Hydrauliknotsteuerung gemäß Anspruch 1, dadurch gekennzeichnet, daß das Schaltventil und das Stetigwegeventil jeweils eine Rückstellfeder (21 und 31) aufweist, deren Federkräfte einstellbar sind.

9. Hydrauliknotsteuerung gemäß Anspruch 1, dadurch gekennzeichnet, daß das Druckbegrenzungsventil (40') eine Rückstellfeder (41) aufweist, deren Federkraft einstellbar ist.

## Claims

1. Hydraulic emergency control for a transmissionratio-dependent change in the hydraulic oil pressures in first and second hydraulic cone-pulley-axial-adjustment devices of a continuously variable belt-and-pulley transmission (10), in which emergency control a pump (1) supplies at least the piston space (17) of the second axial-adjustment device, and at least one downstream pressure-limiting valve (40', 40", 40"', 50) limits the oil pressure there and also feeds the piston space (13) of the first axial-adjustment device from this supply via a continuous directional valve (20', 20''), characterized in that the continuous directional valve is controlled by means of a pressure gradient applied to a choke valve (39) arranged downstream of the pump (1) and integrated in an operating valve (30', 30'', 30'''), and in that the operating valve (30', 30'', 30'''), the continuous directional valve (20', 20'') and the pressure-limiting valve (40', 40'', 40''') are hydraulically activated in each case via at least one of several pilot valves (120, 120'; 140, 140'; 160, 160' and/or 170, 170') against the action of a mechanical and/or hydraulic actuating means arranged at the corresponding controlled valve.

2. Hydraulic emergency control according to Claim 1, characterized in that the pilot oil coming from the individual pilot valves (120, 120'; 140, 140'; 160, 160' and/or 170, 170') via separate control lines (126, 146, 166 and/or 176) is directed at the changeover valve (30', 30'', 30''') to separate control areas (33b, 33a, 33c and/or 33d), in which case the control areas may be of different size.

3. Hydraulic emergency control according to Claim 1, characterized in that the external control oil applied at the pressure-limiting valve (40', 40'', 40''') is directed per control line to a separate control area (43a, 43b and/or 43c), in which case the control areas may be of different size.

4. Hydraulic emergency control according to Claim 1, characterized in that at least two of the pilot valves (120, 120'; 140, 140'; 160, 160' and/or 170, 170') jointly activate the operating valve (30', 30'', 30''').

5. Hydraulic emergency control according to Claim 1, characterized in that the pressure controlled by the pilot valves is drawn from a working line (106) lying between the pressure-limiting valves (40', 40", 40''' and 50).

6. Hydraulic emergency control according to Claim 1, characterized in that the pilot valves (120, 140, 160 and 170) are electrically and hydraulically actuated 3/2-way continuous directional valves, the respectively single working connection of which is hydraulically connected to the respectively single separate control connection opposite the respective electric actuating means.

7. Hydraulic emergency control according to Claim 1, characterized in that the pilot valves (120', 140', 160' and 170') are electrically and hydraulically actuated 3/2-way continuous directional valves with spring return, the respectively single working connection of which is hydraulically connected to the respectively single separate control connection opposite the respective spring return.

8. Hydraulic emergency control according to Claim 1, characterized in that the operating valve and the continuous directional valve each have a return spring (21 and 31), the spring forces of which are adjustable.

9. Hydraulic emergency control according to Claim 1, characterized in that the pressure-limiting valve (40') has a return spring (41), the spring force of which is adjustable.

## Revendications

1. Système de commande hydraulique pour une variation dépendant du rapport de transmission des pressions hydrauliques dans une première et une seconde installation de réglage axial des flasques de poulies hydrauliques d'une transmission continue à courroie (10), dans lequel une pompe (1) alimente au moins une chambre de piston (17) de la seconde installation de réglage axiale et au moins une vanne de limitation de pression (40', 40'', 40"', 50) en aval, limite la pression de liquide à cet endroit ainsi qu'en outre à partir de cette alimentation et par un distributeur à tiroir (20', 20") qui alimente la chambre de piston (13) de la première installation de réglage axiale,
caractérisé en ce que
- le distributeur à tiroir est commandé par l'intermédiaire d'une chute de pression appliquée à une vanne d'étranglement (39) en aval de la pompe (1) et intégré dans une vanne de commutation (30', 30", 30"'), et
- la vanne de commutation (30', 30'', 30'''), le distributeur à tiroir (20', 20") et le distributeur de limitation de pression (40', 40'', 40"') sont commandés hydrauliquement chaque fois par l'intermédiaire d'au moins l'une de plusieurs vannes intermédiaires (120, 120', 140, 140', 160, 160' et/ou 170, 170') contre l'action d'un moyen de commande mécanique et/ou hydraulique dans une vanne de commande correspondante.

2. Système de commande hydraulique selon la revendication 1,
caractérisé en ce que
le liquide hydraulique intermédiaire venant des différentes vannes intermédiaires (120, 120', 140, 140', 160, 160' et/ou 170, 170') par des conduites de commande séparées (126, 146, 166 et/ou 176), arrive sur la vanne de commutation (30', 30", 30"'), sur des surfaces de commande séparées (33b, 33a, 33c et/ou 33d), les surfaces de commande pouvant avoir des dimensions différentes.

3. Système de commande hydraulique selon la revendication 1,
caractérisé en ce que
le liquide hydraulique étranger appliqué contre la vanne de limitation de pression (40', 40", 40"') est conduit vers une surface de commande séparée (43a, 43b et/ou 43c) par conduite de commande, les surfaces de commande pouvant avoir des tailles différentes.

4. Système de commande hydraulique selon la revendication 1,
caractérisé en ce qu'
au moins deux vannes intermédiaires (120, 120', 140, 140', 160, 160' et/ou 170, 170') commandent en commun la vanne de commutation (30', 30'', 30"').

5. Système de commande hydraulique selon la revendication 1,
caractérisé en ce que
la pression commandée par les vannes de commande intermédiaire est prise d'une conduite active (106) placée entre les vannes de limitation de pression (40', 40", 40"') et (50).

6. Système de commande hydraulique selon la revendication 1,
caractérisé en ce que
les vannes de commande intermédiaire (120, 140, 160, 170) sont des distributeurs à tiroirs à 3/2 voies à commandes électrique et hydraulique dont l'unique branchement actif est relié hydrauliquement à l'unique branchement de commande situé en regard du moyen d'actionnement respectif.

7. Système de commande hydraulique selon la revendication 1,
caractérisé en ce que
les vannes de commande intermédiaire (120', 140', 160', 170') sont des distributeurs à tiroirs à 3/2 voies à commande électrique et hydraulique, et rappels par ressort, et dont le branchement actif respectif est relié hydrauliquement, chaque fois avec un seul branchement de commande en regard du moyen de rappel à ressort respectif.

8. Système de commande hydraulique selon la revendication 1,
caractérisé en ce que
la vanne ce commutation et le distributeur à tiroirs comportent chaque fois un ressort de rappel (21, 31) dont les forces de ressort sont réglables.

9. Système de commande hydraulique selon la revendication 1,
caractérisé en ce que
la vanne de limitation de pression (40') comporte un ressort de rappel (41) dont la force de ressort est réglable.
